# EUROPEAN PATENT APPLICATION

(11) **EP 2 040 029 A1**
(43) Date of publication of application: **25.03.2009**
(21) Application number: 07018445.2
(22) Date of filing: 20.09.2007
(51) Int. Cl.: G01C 15/00, G01C 15/06, G01C 17/38

(54) **A multi mode active surveying pole**

(71) Applicant: Swissat AG, 8832 Wollerau (CH)
(72) Inventor: Kurtovic, Zdenko, 8153 Rümlang (CH); Pagan, Robin, 70563 Stuttgart-Vahingen (DE)
(74) Representative: Fischer, Britta Ruth

(57) **Abstract**

A surveying pole, with a 3 axis tilt sensor, a 3 axis magnetic field sensor, a radio transceiver, and associated electronics and battery, all integrated within the body of the surveying pole. The sensors are used to provide correction data allowing the position of the surveying point at the bottom end of the pole to be determined relative to the position of the top end of the pole. The position of the top end of the pole is determined using standard surveying sensors and methodology. Additionally the system is capable of comparing the expected magnetic field vectors to the results actually generated by the 3 axis magnetic field sensor allowing multiple modes of operation to be automatically selected when the environmental magnetic field is distorted, causing errors in the calculation of the azimuth of the pole.

## Description

### BACKGROUND OF THE INVENTION

### 1. Field of the Invention

The invention relates generally to surveying devices as used in measuring coordinates of target positions and more specifically to the surveying poles used to determine the precise position to be surveyed.

### 2. Description of prior art

There is a wide variety of surveying equipment available, which when used in land surveying generally require that a prism or satellite navigation antenna be mounted at the top end of a surveying pole, the bottom end of which terminates in a point, the apex of the point representing the position to be observed.

The position of a satellite navigation antenna is found by using a system of distance triangulation algorithms based upon the timing of signals emitted by satellites in known orbits around the earth, the relative timing of these signals at the antenna, allows the position of the antenna to be calculated. Various strategies are used to improve the accuracy of the calculations, such as the reception of two frequencies broadcast by the satellites to allow for compensation of atmospheric effects, and further refinement by using a second antenna close by, positioned at a known point, constantly broadcasting correction signals for use by the satellite navigation system, whose position is to be determined accuracies of less than one centimeter may be obtained using such systems.

The position of a prism may be found by using an electronic theodolite equipped with an accurate laser range meter, commonly called a total station. The total station is set up either on a known position and the orientation of the horizontal angle measuring system calibrated by pointing the instrument at a second known point. Alternatively, a total station may be positioned by observing the relative positions of a plurality of known points and performing a triangulation transformation on the angle and/or distance measurements so obtained to find the current position of the total station within the coordinate system defined by the coordinates of the known points used for the reference measurements. Total stations generally incorporate a tilt sensor used to calibrate the vertical tilt sensor. After setting up, the total station may be pointed at the centre of a prism and the distance and angle measurements to the prism are used to calculate the position of the prism within the coordinate system. Accuracies in the range of millimeters may be obtained using such systems.

When performing a survey, it is necessary to keep the survey pole bearing the prism or satellite navigation antenna vertical, using an integrated spirit bubble, or plumb line, in order to ensure that the centre of the prism or antenna is directly above the point at the bottom of the pole, ensuring that the point at the bottom of the survey pole is at the same horizontal coordinate as the position measured at the top of the pole.

The altitude of the point on the ground is then determined by measuring the altitude of the centre of the prism or satellite navigation antenna using standard surveying techniques, and then subtracting the distance between the point at the bottom of the pole and the centre of the prism or satellite navigation antenna.

It is however not always possible to place the point at the base of the survey pole exactly upon the point which is to be observed, while keeping the pole vertical, for example when measuring the base of a wall. In such cases the observations made must include offset values which are generally manually measured using tape measures and entered into the surveying apparatus as factors to be taken into account in the position calculation. This increases the amount of time needed to perform a single observation and leads to a greater possibility of errors being introduced due to incorrect observation and entry of the offsets required.

An additional problem is the time taken to align the pole vertically to ensure that the prism or antenna is indeed directly above the base point of the pole. This can take several seconds and is an additional source of errors, as the actual alignment of the pole cannot be ascertained later.

Various solutions have been suggested to the problem of determining the base position accurately, such as making several observations while the pole is tilted at various angles, and interpolating the centre of the measurement sphere from them (U.S. Pat. No. 5,929,807). This is time consuming, requires the storage and integration of large amounts of data, and does not solve the problem of offset measurement, in particular for corners where little movement is possible.

Other solutions have been suggested using extensible poles with tilt sensors (U.S. Pat No. 5,512,905) as part of an integrated satellite navigation system - this limits the application due to the large amount of cabling required to connect the sensors, and the high level of mechanical complexity involved.

A further suggestion is made in (U.S. Pat No. 6,633,256), which combines the above two approaches.

A major problem with all systems which rely upon magnetic field sensors is local distortions of the magnetic field which render the azimuthal angle calculated from the magnetic field values of little value, this being of particular importance in surveying where the quality of the survey is a fundamental requirement, making a system which relies upon magnetic values alone of little use particularly in built up areas where electrical cables or metal pipes may be buried

An objective of the present invention is to present a generic surveying component which can be generally and simply used in combination with existing and future surveying equipment without modification to that equipment which allows fast observations to be performed without separate entry of offset values, by placing the point of the active surveying pole directly at the point to be measured, taking the tilt and orientation of the pole into account, and without time consuming vertical orientation of the survey pole. Another objective is the generation of an error factor giving the user confidence in the observation quality of the measurements obtained by the combination of surveying system and pole, with a minimum of operational overhead to the user, as well as allowing the user to record all sensor data, including the tilt of the pole which is not possible using standard surveying equipment, and ensuring that the quality of the surveyed observations made using the equipment is within acceptable limits at all times. Another objective of the current invention is to provide a simple, low cost surveying instrument by adding an optical sight to the active survey pole as described.

### SUMMARY OF THE INVENTION

The object of the current invention is to provide a self contained active survey pole as a survey component which can be integrated into a variety of surveying configurations with no electrical connection between the components, allowing a more efficient mode of operation, including direct observation of points which cannot be observed directly with a vertical staff, and obviating the need for vertical orientation of the staff.

The active survey pole consists of a 3 axis tilt sensor, a 3 axis magnetic field sensor, control electronics, a radio link and a battery to power the system. The bottom of the pole is tapered to a point coaxial with the axis of the pole. The top of the pole is a standard survey fixture allowing a prism or satellite navigation antenna to be attached to it, with the central measurement point of the attached component coaxial with the axis of the pole.

An external computer either separate from or integrated within the external surveying device calculates the quality of the magnetic field data, or uses the quality signal generated by the sensor control electronics using the magnetic field data to guide the user into different modes of operation based upon the amplitude of the local magnetic disturbances experienced at the location of the survey device.

In place of the prism or antenna or in combination therewith, an optical sight may be provided to allow the pole to be used as a low cost free-standing surveying system, without additional equipment.

IN THE DRAWINGS
Fig 1. is a block diagram of the preferred embodiment of the active survey pole, indicating the radio link connection to an external surveying instrument or computer.
Fig 2. is a diagram showing the effects of a local magnetic distortion causing an angular uncertainty 'e' in the calculation of the azimuth of the pole.

### DETAILED DESCRIPTION OF THE PREFERRED EMBODIMENT

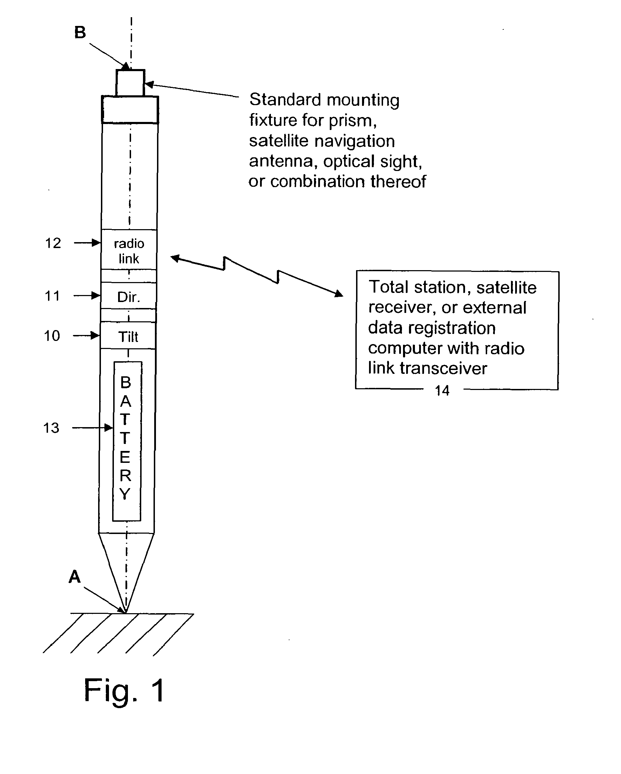

Fig.1 illustrates an embodiment of the present invention without an attachment. In its simplest form, the pole may be used with an optical sight aligned perpendicular to the axis of the pole. In this form a computer capable of receiving the tilt, azimuth and quality information via the radio link (such as the standard "Bluetooth" protocol) running a suitable software package, in which some coordinates of points visible in the immediate vicinity of the area to be surveyed have been defined, and the local magnetic declination is entered into the computer, or loaded from stored data files. This allows the direction information to be converted into direction information within the coordinate system used by the surveyor.

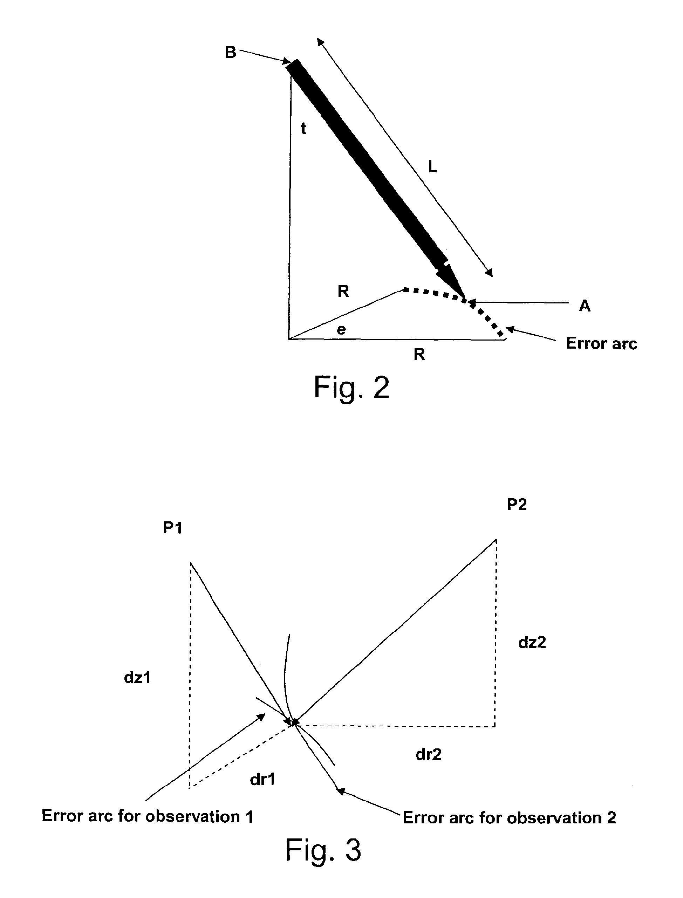

Fig. 2 . In practice however, local magnetic disturbances (caused for example by buried pipes) can make the calculated azimuth of the pole unreliable unless the distortion of the magnetic field is constantly monitored, and used to guide the user to either move the pole to a more vertical position, reducing the dependency upon an accurate azimuth value to give a particular error limit determined by the surveyor. Modem tilt sensors can have accuracies of the order of 0.1 degrees and the azimuth angle derived from the magnetic field sensor values can have accuracies of the order of 0.3 degrees in optimal conditions. Near cars or buried pipes however, the azimuth angle can be incorrect by several degrees. The magnitude of the error can be detected however, by comparing the sum of the squares of all three magnetic field sensors with the local magnetic field to be expected at the approximate geographic position of the observer on the surface of the earth. In addition the angle of tilt of the magnetic field sensors can be further used to compare the horizontal field strength with that expected. The values to be expected for any point on the surface of the earth are derived from a known source such as the World Magnetic Model provided by the National Geophysical Data Centre of the U.S. Department of Commerce. The disparity between the measured and expected field can be used to generate an error value for the azimuth angle 'e' as shown in the figure. As an example, if the surveyor expects to observe positions with an accuracy of better than 10 mm, and is working with a pole of 'L' meters in length, the component of radial error, that is along the axes 'R' due to errors in sensing the tilt angle are liable to be L*Sin( 0.1°), as the accuracy of the tilt angle is of the order of 0.1 degrees. This translates to a radial error of approximately 3.4 millimeters for a pole of 2 meters length - this is the 'thickness' of the error arc shown. A distortion in the local magnetic field causing an error of 'e' degrees will cause a positional error along the circumference of the arc related to the angle of tilt, the radius of the curvature of the arc 'R' being given by R = L*Sin(t), for which the positional error along the error arc at this radius can be up to R*Sin(e/2) - assuming 'e' to encompass the span of the error angle expected. From this it can be seen, that moving the pole into a more vertical position will reduce the value of 'R', in turn reducing the length of the error arc for a given value of 'e'. When the pole is vertical, 'R' is zero and the azimuth value has no effect. As an example, assuming a local error value of e = 2 degrees of a 2 meter pole tilted at 30 degrees, gives a value for 'R' of 1 meter, and a error arc of +/- 17.5 millimeters. To maintain an error length of less than 10 mm, it is therefore necessary to limit the value of 'R' to be less than 10/Sin(2/2) = 573 mm, implying a required angle of 't' of less than 16.6° to attain the desired accuracy. This is not always possible or desirable, when large metal objects are close by or access to the point to be observed is limited in the vertical direction.

Fig. 3 in cases when a large local magnetic error is present and it is not possible or desirable to move the pole to a more vertical position, the system must be capable of an additional mode of data collection, involving taking two or more observations of the pole end without moving the tip of the pole. This allows a bisection to be performed as shown in figure 3, in this case the magnetic azimuth data collected is used only to select which of the two possible bisection solutions is meant in determining the position of the pole tip. In this way the position of the point may be determined in any circumstance, using only two observations, which can also be efficiently realized using modem 'robotic' electronic theodolites.

The universal application of the device is made possible by the use of the magnetic quality measurement, allowing the control software which analyses the tilt and magnetic field sensor data from within the pole a confidence value for the magnetic error to be calculated, warning the user when the limits of acceptable error are close, and allowing switching between appropriate observation modes to be performed automatically and alerting the user only when the error from the system exceeds a pre-defined level, and alerting the user in such cases that an additional observation must be performed to acquire the position of the target point with the required accuracy. This technique is applied to all following modes of operation described.

In one mode of operation, the pointed end of the pole "A" is positioned on a known point in the survey, the magnetic field sensors within the pole give directional information on any object aligned within the optical sight. If the object to be observed is on the same horizontal plane as the base of the pole, a program within the computer using simple trigonometry may be used to calculate the position of the object in the sight, using the angle from the tilt sensor, the angle information from the magnetic field sensors and the length of the pole between the point "A" and the aiming axis of the optical sight. Since the tilt sensor can have an accuracy of the order of 0.1 degrees and the azimuth angle derived from the magnetic field sensor values can have an accuracy of the order of 0.3 degrees, the positional accuracy of the target point can be measured to approximately 5 cm at a distance of 20 meters, which is adequate for many applications, such as finding buried pipes etc.

In another mode of operation, an object may be measured by using the magnetic field sensors, the tilt sensor and the optical sight for taking bearing measurements on a target point and relocating the pole to another known position and repeating the observation of the bearings to the target point, and generating the target position using triangulation algorithms within the computer controller software.

In a third mode of operation, the pole equipped with an optical sight may be positioned freely in the area, and the position of the pole determined by using the sensors and the optical alignment to take bearings on known points within the local survey to calculate the position of the pole using a triangulation algorithm. After determination of the pole position, observations may be made of other points as already discussed.

A further preferred embodiment of the invention is the case in which a prism is mounted at position "B". In this case the use of a radio link to send the tilt and direction information to the total station or data registration computer is essential, as it is impractical to use a long cable between the prism pole and the total station or data registration computer in the field. In this case, the distance over which the tilt sensor and magnetic field sensor correction data must be applied is limited to the distance between the point "A" of the survey pole and the optical center of the prism. An embodiment in which the computer which calculates and registers the data is connected to the total station via a radio link, as well as the radio link to the surveying pole is also envisioned.

A further preferred embodiment of the invention is the case in which a satellite navigation antenna is mounted at position "B". In this case the use of a second radio link to send the satellite navigation coordinates to the data registration computer in the field can also be useful in order to minimize the number of cables, improving operator mobility, safety and efficiency.

Although the present invention has been described in terms of the presently preferred embodiment, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. An active surveying pole system, comprising:
a surveying pole, one end of which terminates in a point "A" to precisely determine the point which is to be surveyed, the opposite end of which "B" has a standard mounting fixture for a surveying sensor such as a GPS antenna or a prism;
a standard surveying sensor attached to said mounting "B" of the pole, mounted such that the survey observation position is coaxial with the longitudinal axis of the surveying pole;
a 3 axis tilt sensor, generally within the pole, for determining the tilt and roll of the pole, thus allowing the calculation of the horizontal displacement between the point "A" and the surveying sensor at "B";
a 3 axis magnetic field sensor, generally within the pole, to allow the direction of tilt of the pole relative to magnetic north to be determined, thus allowing an absolute displacement between point "A" and the surveying sensor at "B" to be determined;
a radio transceiver, such as a "Bluetooth" link, a battery and associated electronics within the pole to allow the tilt and directional information to be sent to an external system without the need for external cabling;
an external system consisting of a radio transceiver, a computing device, and software capable of analyzing the data input from the sensors and controlling the mode of use and storage of the surveying sensor data and surveying pole data,
wherein the position and altitude of the surveying point "A" may be accurately determined by determining the position and altitude of the surveying sensor mounted at "B" and applying the tilt and direction information obtained from the active pole system projected along the vector of known length between the surveying point "A" and the centre of the surveying sensor mounted at "B",
wherein the amplitude of the environmental magnetic field as measured by the 3 axis magnetic field sensors is used to derive an error quotient based upon a comparison of the measured field with the calculated the vector field strength of the local magnetic field and the horizontal and or vertical components thereof, this value being a quality indication of the azimuthal direction of the axis of the surveying pole,
wherein the error quotient derived above is used to force the selection of alternate modes of operation by the user to ensure that one of three modes is automatically selected:
a. low error quotient: allowing use of the pole as normal but ensuring that the azimuthal value used to calculate the position of the tip of the pole is reliable and within limits predetermined by the user,
b. a medium error quotient being displayed to the user, allowing the angle of tilt to be reduced to reduce the dependency of the calculated tip position on the azimuth accuracy of the pole, the circumference of the circle upon which the end of the pole lies being proportional to the sine of the angle of tilt of the pole, and thus the error arc length measured along the circumference of this circle will reduce for a given error of azimuth when the tilt is reduced,
c. if a large error quotient is unavoidable e.g. due to restrictions of access, or large ferrous objects being close, a third mode is automatically selected by the controlling software, informing the user that a second observation must be performed without moving the tip of the pole from the point to be observed, but requiring a movement of the top end of the pole to a second position, allowing the position of the tip of the pole to be determined by a process of bilateration based upon the observations of the surveying sensor and the tilt information derived from the tilt sensors, the magnetic field information being used only to select between the two possible solutions of the bilateration calculation which would otherwise need to be manually selected.

2. The system of claim 1, further comprising,
an external satellite navigation system including an integrated computing system whereby the receiving antenna for the satellite navigation signal is mounted to position "B" with means of receiving the tilt and direction information provided by the active surveying pole and
calculating the displacement of the surveying point "A" of the pole to the survey observation position of the surveying sensor mounted at fixture end "B" of the active surveying pole, and thus integrating the displacement information to provide accurate coordinate observations of the surveying point "A",
wherein the functionality of the error quotient detection and implementation software as described in claim 1 may also be integrated into the controlling software of the external satellite navigation system and not necessarily in a separate additional computing device.

3. The system of claim 1, further comprising,
an external electronic theodolite equipped with a laser range-finding system (total station) whereby the target prism for the laser ranging system is mounted to fixture "B", with means of receiving the tilt and direction information provided by the active surveying pole and calculating the displacement of the surveying point "A" of the pole to the survey observation position of the surveying sensor mounted at fixture end "B" of the active surveying pole, and thus integrating the displacement information to provide accurate coordinate observations of the surveying point "A",
wherein the functionality of the error quotient detection and implementation software as described in claim 1 may also be integrated into the controlling software of the external electronic theodolite system and not necessarily in a separate additional computing device.

4. The system of claim 1, further comprising,
an external computing system, whereby a simple optical sight is used as a survey sensor, with means of receiving the tilt and direction information provided by the active surveying pole and calculating the displacement of the surveying point "A" of the pole to the survey observation position of the optical sight mounted at fixture end "B" of the active surveying pole, and thus integrating the displacement information to provide accurate coordinate observations of the surveying point "A", the position of the pole to be determined by observing one or more known points and using the directional information from the active surveying pole to determine the position of the pole within the coordinate system used, allowing the system to be used as a complete surveying system across short distances.

5. The system of claim 1, further comprising,
an external computing system and an external satellite navigation system whereby the receiving antenna for the satellite navigation signal is mounted to the fixture at position "B", whereby the computing system is able to receive and interpret the positioning information gained by the satellite navigation system, and integrate the positioning information generated by the active surveying pole, thus integrating the displacement information to provide accurate coordinate observations of the surveying point "A", allowing the active pole to be used in combination with any satellite navigation system without modifying existing systems.

6. The system of claim 1, further comprising,
an external computing system and an external electronic theodolite equipped with a laser range-finding system (total station), whereby the target prism for the laser ranging system is mounted to fixture "B", whereby the computing system is able to receive and interpret the positioning information gained standard surveying methods from the total station and integrate the positioning information generated by the active surveying pole, thus integrating the displacement information to provide accurate coordinate observations of the surveying point "A", allowing the active pole to be used in combination with any total station system without modifying existing systems.

7. The system of claim 6, further comprising,
an navigation system whereby the receiving antenna for the satellite navigation signal is mounted on top of the prism which is mounted to the fixture at position "B", allowing the use of satellite navigation information where conditions allow, and position information from an external electronic theodolite equipped with a laser range-finding system (total station) where the satellite navigation signal is not available, or of insufficient quality; the computing system allows for the appropriate length of the vector to be applied when calculating the position of the desired position "A" to be automatically applied depending upon which observation method is active.
